# EUROPÄISCHE PATENTSCHRIFT

(11) **EP 0 454 746 B1**
(45) Veröffentlichungstag und Bekanntmachung des Hinweises auf die Patenterteilung: **28.07.1993**
(21) Anmeldenummer: 90902216.2
(22) Anmeldetag: 09.01.1990
(51) Int. Cl.: F16K 31/00, F16K 27/10

(54) **LAGEREINRICHTUNG FÜR DIE GEWINDEBUCHSE EINER ARMATURENSPINDEL**
BEARING DEVICE FOR THE THREADED SLEEVE OF A FITTING SPINDLE
DISPOSITIF DE SUPPORT POUR LA DOUILLE TARAUDEE DE LA BROCHE D'UNE GARNITURE

(30) Priorität: 21.01.1989 DE 3901702
(43) Veröffentlichungstag der Anmeldung: 06.11.1991
(73) Patentinhaber: KSB Aktiengesellschaft, 67227 Frankenthal (DE)
(72) Erfinder: BARTOSCHEK, Manfred, D-6710 Frankenthal (DE); LOVISETTO, Primo, I-36100 Vicenza (IT)
(86) Internationale Anmeldenummer: EP9000039
(87) Internationale Veröffentlichungsnummer: WO9008282

(56) Entgegenhaltungen:
- DE-A- 3 140 705
- DE-C- 3 503 598
- US-A- 4 033 550

## Beschreibung

Die Erfindung betrifft eine Einrichtung gemäß dem Oberbegriff des Anspruches 1.

Durch die DE-C-35 03 598 ist eine solche Einrichtung bekannt. Dort ist ein von einem Bügel gebildeter Aufsatz auf dem Armaturengehäuse befestigt. Innerhalb des Bügelkopfes ist eine die Spindel umschließende Gewindebuchse angeordnet, die mittels zwei Kugellagern drehbar gelagert ist. Die zwischen dem Bügel und dem Bügelkopf gebildete Wand nimmt dabei das untere Kugellager der Gewindebuchse auf. Zur Herabsetzung der Armaturensteifigkeit ist bei der geschilderten Ausführung noch ein Federelement zwischen der besagten Wand und dem Kugellager vorgesehen.

Der durch einen Bügel gebildete Aufsatz mit Lagerstelle für das Lager der Gewindebuchse wäre bei einer Absperrarmatur mit Blechgehäuse nur durch eine aufwendige Schweißkonstruktion zu verwirklichen. Diese widerspräche aber der gerade bei Blecharmaturen zu stellenden Forderung nach leicht herstellbaren, durch wenige Schweißnähte miteinander zu verbindenden Einzelteilen. Der Erfindung liegt daher die Aufgabe zugrunde, eine Lagereinrichtung für die Gewindebuchse der Spindel einer Absperrarmatur zu schaffen, die vor allem für eine Blechfertigung besonders geeignet ist.

Die gestellte Aufgabe wird, ausgehend von einer im Oberbegriff des Anspruches 1 geschilderten Einrichtung, gelöst durch die im kennzeichnenden Teil des Anspruches 1 genannten Merkmale. Die Unteransprüche nennen vorteilhafte Ausgestaltungen des Erfindungsgegenstandes.

Anhand mehrerer Ausführungsbeispiele wird die Erfindung näher erläutert. Die Zeichnung zeigt in
- Fig. 1: eine im Bereich des Spindelantriebs geschnitten dargestellte Absperrarmatur, in den
- Fig. 2 und 3: die die Lagerstelle für den Spindelantrieb der Fig. 1 bildenden Teile in vergrößerter Einzeldarstellung, und in der
- Fig. 4: eine Variante der Lagerstelle.

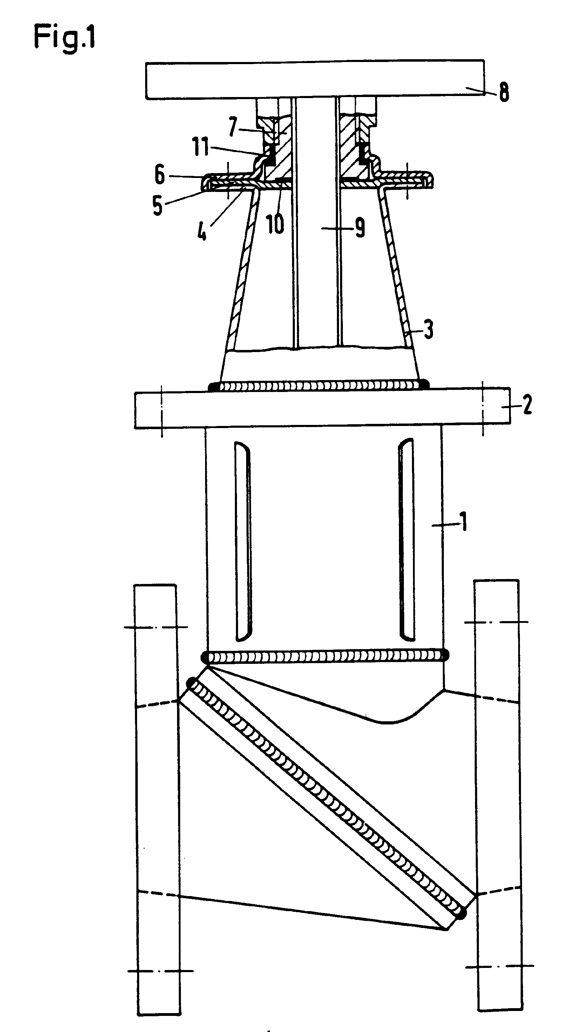

Die in der Fig. 1 dargestellte Absperrarmatur ist mit einem Blechgehäuse (1) ausgestattet, welches von einem mittels eines Flansches (2) befestigten Deckel zur Atmosphäre hin abgeschlossen wird. Auf dem Deckel ist ein Aufsatz (3) angeordnet, der mit dem Deckel verschweißt ist. Der Aufsatz (3) besitzt einen Flansch (4), der der Verbindung mit einer auf ihm liegenden Lagerscheibe (5) und einem Lagerdeckel (6) dient.

Durch die Lagerscheibe (5) und den Lagerdeckel (6) wird eine Gewindebuchse (7) umfaßt, die mit einem Handrad (8) verbunden ist. Eine von dem Handrad (8) ausgeübte Drehbewegung wird durch die Gewindebuchse (7) auf eine von ihr umschlossene steigende, nichtdrehende Spindel (9) in der Weise übertragen, daß letztere und ein an ihr befestigtes -nicht dargestelltes - Verschlußglied je nach Drehrichtung gehoben oder gesenkt werden.

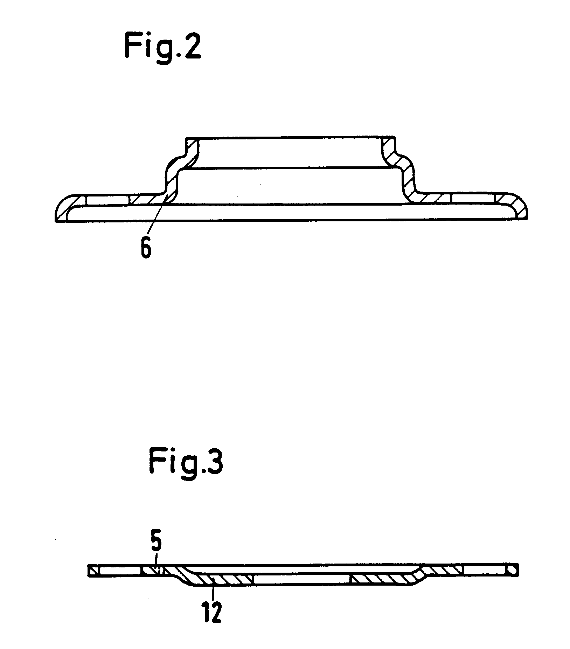

Bei der in den Fig. 1 bis 3 dargestellten Ausführung erfolgt die Lagerung der Gewindebuchse (7) mit Hilfe zusätzlicher Gleitlagerelemente (10) und (11), die fest mit der Gewindebuchse (7) verbunden sind. Derartige Gleitlagerstellen können aber auch an der Lagerscheibe (5) oder dem Lagerdeckel (6) vorgesehen werden. Sie können aus einzelnen, beispielsweise durch Kleben mit dem sie tragenden Teil zu verbindenden Elementen bestehen; sie können aber auch durch Aufspritzen eines Gleitmaterials auf einem oder beiden Gleitpartnern realisiert werden oder sie können lose mit diesen verbunden sein.

Während die Lagerscheibe (5), die im Ausführungsbeispiel der Fig. 1 bis 3 mit einer der Zentrierung im Aufsatz (3) dienenden Auswölbung (12) versehen ist, als Axiallager bei rückwärts durchströmter Absperrarmatur wirkt, übernimmt der Lagerdeckel (6) im hülsenförmigen oberen Bereich die Axiallagerung bei vorwärts durchströmter Armatur und die Radiallagerung bei beliebiger Strömungsrichtung.

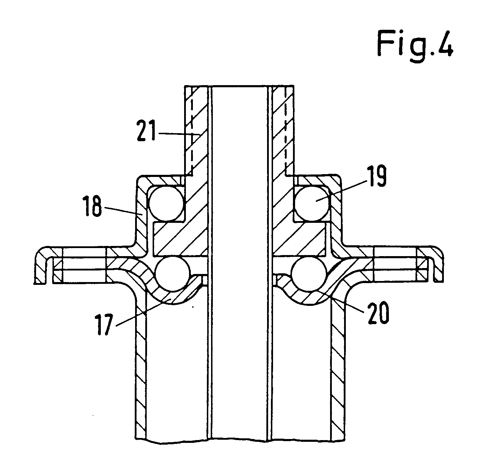

Die in der Fig. 4 gezeigte Variante besitzt eine Lagerscheibe (17) und einen Lagerdeckel (18), die ebenfalls aus Blech hergestellt sind. Die Lagerung wird hier von einem Wälzlager übernommen, dessen Kugeln (19) in einer Kreissicke (20) der Lagerscheibe (17) und in einer durch die Gewindebuchse (21) und den Lagerdeckel (18) gebildeten Kammer angeordnet sind.

## Patentansprüche

1. Einrichtung zur Übertragung der durch einen Antrieb (8) erzeugten Drehbewegung auf eine steigende, nichtdrehende Spindel (9) einer Absperrarmatur, bestehend aus einem auf dem Armaturengehäuse (1) angeordneten Aufsatz (3) und einem von dem Aufsatz (3) getragenen Lager für eine mit einem Bund versehene, die Spindel (9) umschließende und durch den Antrieb (8) zu drehende Gewindebuchse (7, 21), wobei der Aufsatz (3) die untere Lagerstelle für die Gewindebuchse (7, 21) aufnimmt,und einem mittels einer Flanschverbindung am Aufsatz (3) befestigten, die obere Lagerstelle enthaltenden Lagerdeckel (6, 18), **gekennzeichnet durch** eine zwischen dem Aufsatz (3) und dem Lagerdeckel (6, 18) angeordnete, die untere Lagerung tragende Lagerscheibe (5, 17).

2. Einrichtung nach Anspruch 1, dadurch gekennzeichnet, daß der Aufsatz (3) und der Lagerdeckel (6, 18) aus Blech bestehen, wobei der Aufsatz (3) durch einen rotationssymmetrischen Körper gebildet wird.

3. Einrichtung nach Anspruch 1, gekennzeichnet durch eine Lagerung der Gewindebuchse (7) auf einer an den Lagerstellen vorgesehenen Gleitschicht (10, 11) aus einem reibungsarmen Material.

4. Einrichtung nach Anspruch 1, gekennzeichnet durch eine Lagerung der Gewindebuchse (21) mittels Wälzlagern (19), die durch umlaufende Sicken (20) in den sie aufnehmenden Teilen (17) zentriert werden.

5. Einrichtung nach Anspruch 1, gekennzeichnet durch eine kombinierte Gleit- und Wälzlagerung der Gewindebuchse (7, 21).

## Claims

1. A device for the transmission of rotational movement, produced by a drive (8) to a rising, non-rotary stem (9) of a valve, consisting of a headpiece mounted (3) arranged on the housing (1) of the fitting, a bearing carried on the headpiece (3) for a threaded bushing (7 and 21) provided with a collar, surrounding the stem (9) and to be turned by the drive (8), said headpiece (3) receiving the lower bearing means for the threaded bushing (7 and 21), and a bearing cap (6 and 18) which is attached by means of a flange joint on the headpiece (3) and contains the upper bearing means, characterized by a bearing washer (5 and 17) arranged between the headpiece (3) and the bearing cap (6 and 18) and carrying the lower bearing.

2. The device as claimed in claim 1, characterized in that the headpiece (3) and the bearing cap (6 and 18) consist of sheet metal, said headpiece (3) being constituted by a radially symmetrical body.

3. The device as claimed in claim 1, characterized by a bearing of the threaded bushing (7) on an anti-friction layer (10 and 11), provided at the bearing positions, consisting of a low-friction material.

4. The device as claimed in claim 1, characterized by a bearing of the threaded bushing (21) using anti-friction bearings (19), which are centered by encircling ridges (20) in the parts (17) receiving them.

5. The device as claimed in claim 1, characterized by a combined plain and anti-friction bearing for the threaded bushing (7 and 21).

## Revendications

1. Dispositif de transmission d'un mouvement rotatif généré par un entraînement (8) à une broche (9) montante, non rotative, d'un dispositif d'arrêt comprenant un chapeau (3) placé sur le boîtier du dispositif d'arrêt et un palier porté par le chapeau (3) pour une douille taraudée (7, 21) munie d'un collet, enveloppant la broche (9) et à tourner par l'entraînement (8), le chapeau (3) logeant le point d'appui inférieur pour la douille taraudée (7, 21) et comprenant un couvercle de palier (6, 18) fixé au chapeau (3) au moyen d'une liaison par bride et enfermant le point d'appui supérieur caractérisé par un disque de palier (5, 17) placé entre le chapeau (3) et le couvercle de palier (6, 18) et portant le point d'appui inférieur.

2. Dispositif selon la revendication 1 caractérisé en ce que le chapeau (3) et le couvercle de palier (6, 18) sont en tôle, le chapeau (3) étant formé par un corps symétrique en rotation.

3. Dispositif selon la revendication 1 caractérisé par un logement de la douille taraudée (7) sur une couche de glissement (10, 11) prévue aux points d'appui, faite dans un matériau de faible friction.

4. Dispositif selon la revendication 1 caractérisé par un logement de la douille taraudée (21) à l'aide de paliers à rouleaux (19) qui sont centrés dans leurs pièces de logement (17) par des moulures tournantes (20).

5. Dispositif selon la revendication 1 caractérisé par un palier combiné à glissement et à rouleaux de la douille taraudée (7, 21).
